# EUROPÄISCHE PATENTSCHRIFT

(11) **EP 1 269 759 B1**
(45) Veröffentlichungstag und Bekanntmachung des Hinweises auf die Patenterteilung: **09.05.2007**
(21) Anmeldenummer: 01925493.7
(22) Anmeldetag: 20.03.2001
(51) Int. Cl.: H04N 9/64, H04N 5/12, H04N 9/45

(54) **VERFAHREN UND VORRICHTUNG ZUM ERZEUGEN EINES MIT EINEM REFERENZSIGNAL VERKOPPELTEN TAKTSIGNALS**
METHOD AND DEVICE FOR GENERATING A CLOCK SIGNAL THAT IS COUPLED TO A REFERENCE SIGNAL
PROCEDE ET DISPOSITIF DE PRODUCTION D'UN SIGNAL DE RYTHME COUPLE A UN SIGNAL DE REFERENCE

(30) Priorität: 21.03.2000 DE 10013933
(43) Veröffentlichungstag der Anmeldung: 02.01.2003
(73) Patentinhaber: Micronas GmbH, 79108 Freiburg i. Br. (DE)
(72) Erfinder: SCHOENE, Andreas, 81673 München (DE); BEINTKEN, Hartmut, San Diego, CA 92109 (US)
(74) Vertreter: Bickel, Michael
(86) Internationale Anmeldenummer: PCT/EP2001/003190
(87) Internationale Veröffentlichungsnummer: WO 2001/072050

(56) Entgegenhaltungen:
- EP-A- 0 535 945
- EP-A- 0 591 707
- US-A- 4 841 357
- NILLESEN T.: "Digitaler TV-Farbdecoder mit Zeilenverkopplung" FERNSEH UND KINOTECHNIK, Bd. 40, Nr. 4, 1986, Seiten 141-146, XP002034370 BERLIN DE

## Beschreibung

Die vorliegende Erfindung betrifft ein Verfahren und eine entsprechend ausgestaltete Vorrichtung zum Erzeugen eines Taktsignals, welches mit einem Referenzsignal verkoppelt ist, wobei die Erfindung insbesondere zur Erzeugung eines mit einem analogen Videosignal zeilen- oder farbträgerverkoppelten Systemtaktsignals für einen entsprechenden Decoder des Videosignals anwendbar ist.

Für die meisten integrierten Schaltungen ('ICs') zur Videoverarbeitung, insbesondere auf dem Gebiet der digitalen Fernsehtechnik, wird ein sogenannter zeilen- oder farbträgerverkoppelter Takt benötigt, der mit dem analogen Videosignal (FBAS-Signal) verkoppelt und somit damit synchronisiert ist. Dabei sind prinzipiell zwei verschiedene Verkoppelungen, nämlich eine Zeilenverkopplung oder eine Farbträgerverkopplung, möglich. Im ersten Fall werden als Referenz für die Takterzeugung die horizontalen Syncimpulse des Videosignals verwendet, während im zweiten Fall der sogenannte Colourburst des Videosignals verwendet wird.

Zur Erzielung der oben genannten Verkopplung werden heutzutage zwei verschiedene Ansätze verwendet.

Gemäß dem ersten Ansatz wird der für den jeweiligen IC vorgesehen Systemtakt entsprechend den in dem FBAS-Signal enthaltenen Synchronisationssignalen nachgeregelt. Auch der herkömmlicherweise zur Digitalisierung des FBAS-Signals vorgesehene Analog/Digital-Wandler wird mit demselben Systemtakt betrieben.

Gemäß dem zweiten Systemtakt läuft das jeweilige System und damit auch der Analog/Digital-Wandler vollkommen frei, so daß das FBAS-Signal von dem Analog/Digital-Wandler asynchron abgetastet wird. Eine digitale Schaltung berechnet die Abweichung zwischen dem tatsächlichen Abtasttakt und dem virtuellen, mit dem FBAS-Signal verkoppelten Abtasttakt (sogenannter Skew-Wert) und korrigiert anschließend die asynchronen Abtastwerte des digitalisierten FBAS-Signals.

Weitere Ansätze sind aus der Druckschrift NILLESEN T.: "Digitaler TV-Farbdecoder mit Zeilenverkopplung" FERNSEH UND KINOTECHNIK, Bd. 40, Nr. 4, 1986, Seiten 141-146, XP002034370 BERLIN DE bekannt.

Durch die verstärkte Hochintegration ('System on A Chip') ist es notwendig, beide zuvor beschriebenen Verfahren auf einem IC unterzubringen, da jedes Verfahren Vorteile für bestimmte Systemteile aufweist. Um beide Verfahren gleichzeitig anwenden zu können, müßte jedoch das analoge FBAS-Signal zweimal analog/digital-gewandelt werden, wobei die eine Analog/Digital-Wandlung mit einem freilaufenden, d.h. mit einem nicht mit dem FBAS-Signal verkoppelten asynchronen Takt und die andere Analog/Digital-Wandlung mit einem verkoppelten und geregelten Takt durchgeführt wird. Diese Vorgehensweise ist jedoch wegen des damit verbundenen Gesamtaufwands nicht tragbar.

Zunehmend finden sich auch Anwendungen, bei denen bereits an anderer Stelle digitalisierte Signale, beispielsweis FBAS-Signale oder andere Signale mit einem Takt zu verkoppeln sind. Dies soll unabhängig davon erfolgen, an welchen Takt die Digitalisierung und die empfangene Datenfolge geknüpft sind. Derartige Anwendungen finden sich beispielsweise in Personal Computern, deren Systemtakt in der Regel fest vorgegeben ist und der mittels vorgegebener Verarbeitungsgruppen die Digitalisierung und Datenfolge bestimmt.

Der vorliegenden Erfindung liegt daher die Aufgabe zugrunde, ein Verfahren und eine Vorrichtung zum Erzeugen eines mit einem Referenzsignal verkoppelten Taktsignals vorzuschlagen, bei dem die zuvor beschriebenen Probleme gelöst sind und mit einem geringen Aufwand die beiden oben beschriebenen Ansätze gemeinsam auf einem IC realisiert werden können.

Diese Aufgabe wird erfindungsgemäß durch ein Verfahren mit den Merkmalen des Anspruches 1 bzw. eine Vorrichtung mit den Merkmalen des Anspruches 12 gelöst. Die Unteransprüche definieren jeweils vorteilhafte und bevorzugte Ausführungsformen der vorliegenden Erfindung.

Erfindungsgemäß werden ein freilaufender Takt und ein mit einem Referenzsignal verkoppelter Takt aus ein und demselben (hochfrequenten und quarzverkoppelten) Takt abgeleitet. Das dadurch entstehende Vorwissen über die Phasenlage der verschiedenen Takte zueinander kann für eine Umrechnung oder Umsetzung der digitalisierten Abtastwerte des Analog/Digital-Wandlers, der mit dem freilaufenden asynchronen Takt betrieben wird, in entsprechende mit dem verkoppelten Takt vorliegende Abtastwerte genutzt werden, die ihrerseits die Grundlage für die Erzeugung bzw. Regelung des verkoppelten Takts bilden.

Ein großer Vorteil der Erfindung liegt in der einfachen und präzisen Gewinnung der Phasenlage zwischen den beiden Takten, wodurch im vorliegenden Fall insbesondere ein zusätzlicher Analog/Digital-Wandler eingespart werden kann, so daß die Erfindung lediglich einen einzigen Analog/Digital-Wandler erfordert.

Zur Regelung des verkoppelten Takts kann beispielsweise ein vollständig digital aufgebauter Phasenregelkreis mit einem digital gesteuerten Oszillator ('Digital Timing Oscillator', DTO) verwendet werden, wodurch analoge Komponenten, die stets technologieabhängig und schwer testbar sind, im Regelkreis vermieden werden können. Selbstverständlich sind jedoch auch andere Anordnungen, wie beispielsweise Laufzeitketten etc., zur Ausgabe des verkoppelten Takts denkbar.

Die Umsetzung der mit dem freilaufenden Takt vorliegenden digitalen Abtastwerte des Analog/Digital-Wandlers in entsprechende Abtastwerte mit der verkoppelten Taktfrequenz kann durch eine vorzugsweise lineare Interpolation erfolgen, die auf Grundlage der ermittelten Phasenlage oder Phasenabweichung zwischen dem freilaufenden Takt und dem verkoppelten Takt durchgeführt wird. Zu diesem Zweck werden die für die Interpolation benötigten Abtastwerte des Analog/Digital-Wandlers gleichzeitig mit dem jeweils festgestellten Phasenwert in Übereinstimmung mit dem verkoppelten Takt abgespeichert und einem entsprechenden Interpolator zugeführt.

Die vorliegende Erfindung läßt sich vorzugsweise zur Erzeugung eines mit einem Fernseh- oder Videosignal verkoppelten Taktsignals auf dem Gebiet der digitalen Fernsehtechnik verwenden. Die Erfindung ist jedoch nicht auf diesen bevorzugten Anwendungsbereich beschränkt, sondern kann allgemein überall dort eingesetzt werden, wo ein mit einem Referenztakt verkoppeltes Taktsignal erzeugt werden soll.

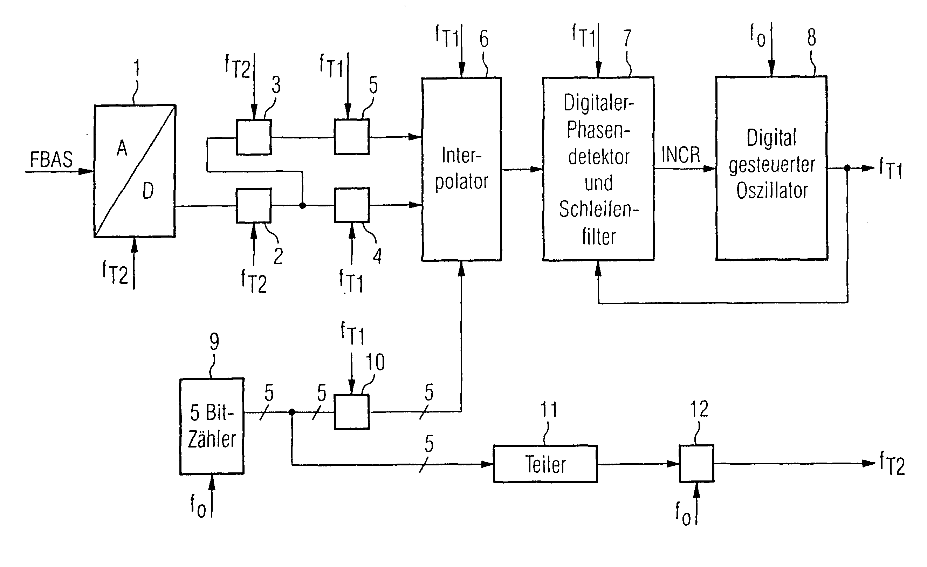

Die Erfindung wird nachfolgend unter Bezugnahme auf die beigefügte Zeichnung anhand eines bevorzugten Ausführungsbeispiels näher erläutert, wobei die einzige Figur ein vereinfachtes Blockschaltbild einer erfindungsgemäßen Vorrichtung gemäß dem bevorzugten Ausführungsbeispiel darstellt.

Bei integrierten Schaltungen zur Videoverarbeitung, wie sie beispielsweise in digitalen Fernsehgeräten eingesetzt werden, ist es oft erforderlich, die internen Takte mit dem empfangenen analogen Videosignal (FBAS-Signal) zu verkoppeln, wobei prinzipiell zwei verschiedene Verkoppelungen, nämlich eine Zeilenverkopplung oder eine Farbträgerverkopplung, möglich sind. Im ersten Fall werden als Referenz für die Takterzeugung die horizontalen Syncimpulse des Videosignals verwendet, während im zweiten Fall der sogenannte Colourburst des Videosignals verwendet wird. Im folgenden wird davon ausgegangen, daß eine Verkopplung mit den horizontalen Syncimpulse des empfangenen Videosignals durchgeführt wird. Die Erfindung ist jedoch selbstverständlich ebenso auf den Fall einer Farbträgerverkopplung anwendbar.

Bei dem in der Figur dargestellten Ausführungsbeispiel wird das analoge FBAS-Signal von einem Analog/Digital-Wandler 1 mit einem freilaufenden Takt f_{T2} abgetastet und in ein entsprechendes digitales FBAS-Signal umgesetzt. Diese Abtastung wird für den folgenden digitalen Farbdecoder benötigt.

Der freilaufende Takt f_{T2} wird durch Teilung aus einem ebenfalls freilaufenden hochfrequenten und quarzverkoppelten Takt mit einer Frequenz von mindestens f₀ = 600 MHz gewonnen. Die hohe Frequenz f₀ garantiert die für 100 Hz-Fernsehgeräte erforderliche Phasenauflösung 1/f₀ < 3ns. Im vorliegenden Fall beträgt f₀ = 648 MHz.

Im vorliegenden Fall beträgt der freilaufende Takt f_{T2} = 20,25 MHz. Es ist ein Teiler 11 vorgesehen, der lediglich die Zustandswechsel des höchstwertigen Bits ('Most Significant Bit', MSB), d.h. des Bits Nr. 5, der von einem mit dem hochfrequenten Takt f₀ betriebenen 5 Bit-Zähler 9 erzeugten und dem jeweiligen Zählerstand entsprechenden Datenwörter überwacht und über ein ebenfalls mit f₀ betriebenes Register 12 als Takt f_{T2} ausgibt. Auf diese Weise wird das freilaufende Taktsignal f_{T2} = f₀/2⁵ = f₀/32 = 20,25 MHz erzeugt.

In einem digitalen 100 Hz-Fernsehgerät soll das Bild nach einer entsprechenden 100 Hz-Umsetzung am Ausgang mit 36 MHz zeilenverkoppelt angezeigt werden. Zur Erzeugung dieses zeilenverkoppelten Takts f_{T1} wird ein digitaler Phasenregelkreis mit einem digitalen Phasendetektor und Schleifenfilter 7 sowie einem digital gesteuerten Oszillator 8 in Kombination mit einem Interpolator 6 verwendet. Der digitale Phasendetektor und Schleifenfilter 7 wird mit dem verkoppelten Takt f_{T1} betrieben und bestimmt die Phasenabweichung zwischen den in dem FBAS-Signal enthaltenen horizontalen Syncimpulsen und den augenblicklich von dem digital gesteuerten Oszillator 8 erzeugten Taktimpulsen, die als das verkoppelte Taktsignal f_{T1} ausgegeben werden. Die Phasenabweichung wird in einen inkrementellen Stellwert INCR für den mit dem hochfrequenten Takt f₀ betriebenen digital gesteuerten Oszillator 8 umgesetzt, so daß im eingeregelten Zustand von dem digital gesteuerten Oszillator 8 eine an die Horizontalfrequenz des FBAS-Signal angepaßte und damit verkoppelte Ausgangsfrequenz f_{T1} erzeugt wird.

Durch die feste Verbindung zwischen dem freilaufenden Takt f_{T2} und dem verkoppelten Takt f_{T1} über den hochfrequenten Quarztakt f₀ kann die Phasenlage zwischen diesen beiden Takten einfach mit einer Auflösung von 1/f₀ verfolgt werden.

Der Zählerstand des 5 Bit-Zählers 9 gibt die augenblickliche Phase des freilaufenden Takts f_{T2} (20,25 MHz) wieder. Wird der augenblickliche Zählerstand des Zählers 9 mit jeder aktiven Taktflanke des verkoppelten Takts f_{T1} (36 MHz) in einem Register 10 abgespeichert, kann dieser gespeicherte Wert direkt zur Umrechnung der 20,25MHz-Abtastwerte in entsprechende 36 MHz-Abtastwerte genutzt werden, da der in dem Register 10 jeweils gespeicherte Wert ein Maß für die Phasenabweichung zwischen dem verkoppelten Taktsignal f_{T1} (36 MHz) und dem freilaufenden Taktsignal f_{T2} (20,25 MHz) ist.

Zu diesem Zweck ist der bereits erwähnte und mit dem verkoppelten Takt f_{T1} betriebene Interpolator 6 vorgesehen, dem jeweils der in dem Register 10 gespeicherte Zählerstand zugeführt wird. Bei dem dargestellten Ausführungsbeispiel führt der Interpolator 6 eine lineare Interpolation durch, die für den betrachteten Fall der Syncerkennung ausreichend ist. Für die lineare Interpolation genügt die Erfassung von zwei Abtastwerten des von dem Analog/Digital-Wandler 1 mit der freilaufenden Taktfrequenz f_{T2} = 20,25 MHz bereitgestellten digitalen FBAS-Signals. Daher sind dem Analog/Digital-Wandler 1 zwei mit dem freilaufenden Takt f_{T2} betriebene Register 2 und 3 nachgeschaltet, in denen zwei aufeinanderfolgende Abtastwerte des digitalen FBAS-Signals gespeichert werden. Um diese Abtastwerte dem Interpolator 6 zur Verfügung zu stellen, müssen die Abtastwerte gleichzeitig mit dem in dem Register 10 zu speichernden Phasenwert gespeichert werden. Diese Aufgabe übernehmen zwei mit dem verkoppelten Takt f_{T1} betriebene Register 4 und 5, in denen somit jeweils ein Abtastwert aus dem 20,25 MHz-System synchron zu dem Register 10 abgespeichert wird.

Soll mit Hilfe des Interpolators 6 nicht nur eine lineare, sondern eine höherwertigere Interpolation durchgeführt werden, die mehr als zwei Abastwerte des digitalen FBAS-Signals voraussetzt, muß die Anzahl der mit dem freilaufenden Takt f_{T2} betriebenen Register sowie die Anzahl der mit dem verkoppelten Takt f_{T1} betriebenen Register entsprechend erhöht werden.

Der Interpolator 6 ermittelt durch Interpolation aus dem mit dem freilaufenden Takt f_{T2} abgetasteten FBAS-Signal neue digitale Abtastwerte für den verkoppelten Takt f_{T1}. Der somit mit der Frequenz f_{T1} gewonnene digitale FBAS-Datenstrom dient anschließend als Eingangssignal für den digitalen Phasenregelkreis, so daß schließlich von dem digital gesteuerten Oszillator 8, der beispielsweise in Form eines rückgekoppelten Addierers ausgestaltet sein kann, der zeilenverkoppelte Takt f_{T1} erzeugt wird.

## Patentansprüche

1. Verfahren zum Erzeugen eines mit einem Referenzsignal (FBAS) verkoppelten Taktsignals,
umfassend die Schritte
a) Bereitstellen eines ersten Taktsignals (f_{T2}) aus einem Betriebstaktsignal (f₀), dem Referenzsignal (FBAS) oder einem extern zugeführten Taktsignal,
b) Bereitstellen einer Folge von Abtastwerten des Referenzsignals (FBAS) mit der Frequenz des ersten Taktsignals (f_{T2}),
c) Bereitstellen eines zweiten Taktsignals (f_{T1}) aus derselben für das erste Taktsignal verwendeten Signalquelle,
d) Ermitteln der Phasenabweichung zwischen dem ersten Taktsignal (f_{T2}) und dem zweiten Taktsignal (f_{T1}), und
e) Umsetzen der mit der Frequenz des ersten Taktsignals(fT2) vorliegenden Abtastwerte des Referenzsignals (FBAS) in entsprechende mit der Frequenz des zweiten Taktsignals (f_{T1}) vorliegende Abtastwerte auf Grundlage der im Schritt d) ermittelten Phasenabweichung, wobei die daraus resultierenden Abtastwerte des Referenzsignals (FBAS) im Schritt c) als Sollvorgabe für die Erzeugung des zweiten Taktsignals (f_{T1}) verwendet werden, um somit das zweite Taktsignal(f_{T1}) verkoppelt mit dem Referenzsignal (FBAS) zu erzeugen.

2. Verfahren nach Anspruch 1,
**dadurch gekennzeichnet, dass**
das Referenzsignal (FBAS) mit dem ersten Taktsignal (f_{T2}) oder dem zweiten Taktsignal(f_{T1}) verkoppelt ist und das erste Taktsignal (f_{T2}) und das zweite Taktsignal (f_{T1}) aus dem Referenzsignal (FBAS) erzeugt werden.

3. Verfahren nach einem der Ansprüche 1 oder 2, bei dem die Abtastwerte als digitalisierte Abtastwerte erzeugt werden.

4. Verfahren nach einem der vorangehenden Ansprüche,
**dadurch gekennzeichnet, dass**
im Schritt e) eine Interpolation der im Schritt b) bereitgestellten Abtastwerte des Referenzsignals (FBAS) mit der Frequenz des ersten Taktsignals (f_{T2}) und auf Grundlage der im Schritt d) ermittelten Phasenabweichung durchgeführt wird,
wobei die dadurch gewonnenen interpolierten digitalisierten Abtastwerte des Referenzsignals (FBAS) im Schritt c) als Sollvorgabe für die Erzeugung des zweiten Taktsignals(f_{T1}) verwendet werden.

5. Verfahren nach einem der vorangehenden Ansprüche,
**dadurch gekennzeichnet, dass**
im Schritt e) eine lineare Interpolation durchgeführt wird.

6. Verfahren nach einem der vorhergehenden Ansprüche,
**dadurch gekennzeichnet, dass**
das zweite Taktsignal (f_{T1}) im Schritt e) mit Hilfe eines digitalen Phasenregelkreises (7, 8) erzeugt wird.

7. Verfahren nach einem der vorhergehenden Ansprüche,
**dadurch gekennzeichnet, dass**
als Betriebstaktsignal (f₀) ein hochfrequentes quarzverkoppeltes Taktsignal verwendet wird.

8. Verfahren nach einem der vorhergehenden Ansprüche,
**dadurch gekennzeichnet, dass**
die im Schritt c) bereitgestellten Abtastwerte des Referenzsignals (FBAS) vor ihrer Verwendung bei der im Schritt e) durchgeführten Umsetzung mit der Frequenz des zweiten Taktsignals (f_{T1}) zwischengespeichert und erst anschließend für die Umsetzung verwendet werden.

9. Verfahren nach Anspruch 8,
**dadurch gekennzeichnet, dass**
im Schritt e) die Phasenabweichung zwischen dem ersten Taktsignal (fT2) und dem zweiten Taktsignal(f_{T1}) mit der Frequenz des zweiten Taktsignals(f_{T1}) ermittelt und synchron zu den digitalisierten Abtastwerten des Referenzsignals (FBAS) zwischengespeichert wird.

10. Verfahren nach einem der vorhergehenden Ansprüche,
**dadurch gekennzeichnet , dass**
im Schritt a) das erste Taktsignal (f_{T2}) durch Auswertung des Zählerstands eines mit dem Betriebstaktsignal (f₀) betriebenen Zählers (9) erzeugt wird.

11. Verfahren nach Anspruch 10,
**dadurch gekennzeichnet, dass**
der augenblickliche Zählerstand des Zählers (9) mit der Frequenz des zweiten Taktsignals(f_{T1}) ermittelt und der jeweils ermittelte Zählerstand im Schritt d) als Maß für die Phasenabweichung zwischen dem ersten Taktsignal(f_{T2}) und dem zweiten Taktsignal(f_{T1}) verwendet wird.

12. Vorrichtung zum Erzeugen eines mit einem Referenzsignal verkoppelten Taktsignals, umfassend :
- eine erste Taktsignal-Erzeugungseinrichtung (11) zum Erzeugen eines ersten Taktsignals (f_{T2}),
- eine mit dem ersten Taktsignal (f_{T2}) betriebene Einrichtung, die eine Folge von Abtastwerten des Referenzsignals (FBAS) gewinnt,
- eine zweite Taktsignal-Erzeugungseinrichtung (7, 8) zum Erzeugen eines zweiten Taktsignals (f_{T1}),
- eine Phasenabweichung-Ermittlungseinrichtung (10) zum Ermitteln der Phasenabweichung zwischen dem ersten Taktsignal (f_{T2}) und dem zweiten Taktsignal (f_{T1}), und
- eine Umsetzeinrichtung (6) zum Umsetzen der mit der Frequenz des ersten Taktsignals (f_{T2}) vorliegenden Abtastwerte des Referenzsignals (FBAS) der Einrichtung(1) in entsprechende mit der Frequenz des zweiten Taktsignals(f_{T1}) vorliegende Abtastwerte auf Grundlage der von der Phasenabweichung Ermittlungseinrichtung (10) ermittelten Phasenabweichung, wobei die von der Umsetzeinrichtung (6) ausgegebenen Abtastwerte des Referenzsignals (FBAS) der zweiten Taktsignal Erzeugungseinrichtung (7, 8) als Sollvorgabe für die Erzeugung des zweiten Taktsignals(f_{T1}) zugeführt sind, so dass von der zweiten Taktsignal-Erzeugungseinrichtung (7, 8) das zweite Taktsignal (f_{T1}) verkoppelt mit dem Referenzsignal (FBAS) ausgegeben wird.

13. Vorrichtung nach Anspruch 12,
**dadurch gekennzeichnet, dass**
ein Betriebstaktsignal (f₀) bereitsteht und dass
die erste und zweite Taktsignal-Erzeugungseinrichtung (11, 7,8) das erste Taktsignal (f_{T2}) und das zweite Taktsignal (f_{T1}) aus dem Betriebstaktsignal (f₀) erzeugen.

14. Vorrichtung nach Anspruch 12,
**dadurch gekennzeichnet, dass**
die erste und zweite Taktsignal-Erzeugungseinrichtung (11,7,8) das erste Taktsignal (f_{T2}) und das zweite Taktsignal (f_{T1}) aus dem Referenzsignal (FBAS) erzeugen.

15. Vorrichtung nach Anspruch 12,
**dadurch gekennzeichnet, dass**
die erste und zweite Taktsignal-Erzeugungseinrichtung (11,7,8) das erste Taktsignal (f_{T2}) und das zweite Taktsignal (f_{T1}) aus einem extern zugeführten Taktsignal, das insbesondere dem ersten Taktsignal(fT2) entspricht, erzeugen.

16. Vorrichtung nach Anspruch 12, bei dem die Einrichtung(1) ein Analog-Digital-Wandler ist.

17. Vorrichtung nach einem der vorangehenden Ansprüche, bei der die Umsetzeinrichtung (6) digitalisierte Abtastwerte ausgibt.

18. Vorrichtung nach einem der vorangehenden Ansprüche,
**dadurch gekennzeichnet, dass**
die Umsetzeinrichtung (6) derart ausgestaltet ist, dass sie die Funktion eines Interpolators, insbesondere eines linearen Interpolators, ausführt.

19. Vorrichtung nach einem der vorangehenden Ansprüche,
**dadurch gekennzeichnet, dass**
die zweite Taktsignal-Erzeugungseinrichtung (7, 8) in Form eines digitalen Phasenregelkreises ausgestaltet ist, welcher eine digitale Phasendetektoreinrichtung (7) und eine digital gesteuerte Oszillatoreinrichtung (8) umfasst,
wobei die digital gesteuerte Oszillatoreinrichtung (8) das zweite Taktsignal (f_{T1}) erzeugt, und
wobei die digitale Phasendetektoreinrichtung (7) die Phasenabweichung zwischen den von der Umsetzeinrichtung (6) ausgegebenen digitalisierten Abtastwerten des Referenzsignals (FBAS) und dem von der digital gesteuerten Oszillatoreinrichtung (8) erzeugten zweiten Taktsignal (f_{T1}) ermittelt und davon abhängig einen digitalen Stellwert (INCR) für die digital gesteuerte Oszillatoreinrichtung (8) zur entsprechenden Anpassung der Frequenz des zweiten Taktsignals (f_{T1}) erzeugt.

20. Vorrichtung nach einem der vorangehenden Ansprüche 13 oder 16 bis 19,
**dadurch gekennzeichnet, dass**
das Betriebstaktsignal (f₀) ein hochfrequentes quarzverkoppeltes Taktsignal ist.

21. Vorrichtung nach einem der vorangehenden Ansprüche,
**dadurch gekennzeichnet, dass**
erste Speichermittel (2, 3) zum Zwischenspeichern der von der Analog/Digital-Wandlereinrichtung(1) ausgegebenen Abtastwerte des Referenzsignals (FBAS) mit der Frequenz des zweiten Taktsignals(f_{T1}) vorgesehen sind, und dass zweite Speichermittel (4, 5) vorgesehen sind, um die in den ersten Speichermitteln (2, 3) zwischengespeicherten digitalisierten Abtastwerte mit der Frequenz des ersten Taktsignals (f_{T2}) zwischenzuspeichern und der Umsetzeinrichtung (6) zuzuführen.

22. Vorrichtung nach einem der vorangehenden Ansprüche,
**dadurch gekennzeichnet, dass**
ein mit dem Betriebstaktsignal (f₀) betriebener Zähler (9) vorgesehen ist, und dass die erste Taktsignal-Erzeugungseinrichtung (11) derart ausgestaltet ist, dass sie das erste Taktsignal (f_{T2}) durch Auswertung des Zählerstands des Zählers (9) erzeugt.

23. Vorrichtung nach Anspruch 22,
**dadurch gekennzeichnet, dass**
die Phasenabweichung-Ermittlungseinrichtung Speichermittel (10) umfasst, um den augenblickliche Zählerstand des Zählers (9) mit der Frequenz des zweiten Taktsignals(f_{T1}) zu ermitteln und den jeweils ermittelten Zählerstand der Umsetzeinrichtung (6) als Maß für die Phasenabweichung zwischen dem ersten Taktsignal (fT2) und dem zweiten Taktsignal(f_{T1}) zuzuführen.

24. Vorrichtung nach einem der vorangehenden Ansprüche 13 oder 16 bis 23,
**dadurch gekennzeichnet, dass**
das Referenzsignal (FBAS) ein Videosignal, insbesondere ein Fernsehsignal, ist, und dass die Frequenz (f₀) des Betriebstaktsignals, aus dem das erste und/oder zweite Taktsignal (f_{T2}; f_{T1}) abgeleitet werden, mindestens 600 MHz beträgt.

## Claims

1. Method for generating a clock signal which is coupled to a reference signal (FBAS),
comprising the steps:
a) providing a first clock signal (f_{T2}) consisting of an operating clock signal (f₀), the reference signal (FBAS) or an externally supplied clock signal,
b) providing a sequence of sampled values of the reference signal (FBAS) at the frequency of the first clock signal (f_{T2}),
c) providing a second clock signal (f_{T1}) from the same signal source as used for the first clock signal,
d) determining the phase difference between the first clock signal (f_{T2}) and the second clock signal (f_{T1}), and
e) converting the sampled values of the reference signal (FBAS) at the frequency of the first clock signal (f_{T2}) to corresponding sampled values at the frequency of the second clock signal (f_{T1}) on the basis of the phase difference determined in step d), wherein the resulting sampled values of the reference signal (FBAS) are used in step c) as the nominal specification for generating the second clock signal (f_{T1}), in order thus to generate the second clock signal (f_{T1}) coupled to the reference signal (FBAS).

2. Method according to claim 1, **characterised in that** the reference signal (FBAS) is coupled to the first clock signal (f_{T2}) or the second clock signal (f_{T1}), and the first clock signal (f_{T2}) and the second clock signal (f_{T1}) are generated from the reference signal (FBAS).

3. Method according to one of claims 1 or 2, in which the sampled values are generated as digitised sampled values.

4. Method according to one of the preceding claims, **characterised in that** in step e) an interpolation of the sampled values of the reference signal (FBAS) provided in step b) is carried out at the frequency of the first clock signal (f_{T2}) and on the basis of the phase difference determined in step d), wherein the interpolated digitised sampled values of the reference signal (FBAS) thus obtained are used in step c) as the nominal specification for generating the second clock signal (f_{T1}) .

5. Method according to one of the preceding claims, **characterised in that** in step e) a linear interpolation is carried out.

6. Method according to one of the preceding claims, **characterised in that** the second clock signal (f_{T1}) is generated in step e) by means of a digital phase-locked loop (7, 8).

7. Method according to one of the preceding claims, **characterised in that** a high-frequency quartz-coupled clock signal is used as the operating clock signal (f₀).

8. Method according to one of the preceding claims, **characterised in that** the sampled values of the reference signal (FBAS) which are provided in step c) are buffer-stored at the frequency of the second clock signal (f_{T1}) before being used in the conversion carried out in step e), and only then are they used only for the conversion.

9. Method according to claim 8, **characterised in that** in step e) the phase difference between the first clock signal (f_{T2}) and the second clock signal (f_{T1}) is determined at the frequency of the second clock signal (f_{T1}) and is buffer-stored synchronously with the digitised sampled values of the reference signal (FBAS).

10. Method according to one of the preceding claims, **characterised in that** in step a) the first clock signal (f_{T2}) is generated by evaluating the counter state of a counter (9) operated with the operating clock signal (f₀).

11. Method according to claim 10, **characterised in that** the momentary counter state of the counter (9) is determined at the frequency of the second clock signal (f_{T1}), and the respectively determined counter state is used in step d) as the measure of the phase difference between the first clock signal (f_{T2}) and the second clock signal (f_{T1}).

12. Device for generating a clock signal which is coupled to a reference signal, comprising:
- a first clock signal generating device (11) for generating a first clock signal (f_{T2}),
- a device which is operated with the first clock signal (f_{T2}) and which produces a sequence of sampled values of the reference signal (FBAS),
- a second clock signal generating device (7, 8) for generating a second clock signal (f_{T1}),
- a phase difference determination device (10) for determining the phase difference between the first clock signal (f_{T2}) and the second clock signal (f_{T1}), and
- a conversion device (6) for converting the sampled values of the reference signal (FBAS) of the device (1) at the frequency of the first clock signal (f_{T2}) to corresponding sampled values at the frequency of the second clock signal (f_{T1}) on the basis of the phase difference determined by the phase difference determination device (10), wherein the sampled values of the reference signal (FBAS) which are output by the conversion device (6) are fed to the second clock signal generating device (7, 8) as the nominal specification for generating the second clock signal (f_{T1}), so that the second clock signal (f_{T1}) coupled to the reference signal (FBAS) is output by the second clock signal generating device (7, 8).

13. Device according to claim 12, **characterised in that** an operating clock signal (fₒ) is provided, and **in that** the first and second clock signal generating devices (11, 7, 8) generate the first clock signal (f_{T2}) and the second clock signal (f_{T1}) from the operating clock signal (f₀).

14. Device according to claim 12, **characterised in that** the first and second clock signal generating devices (11, 7, 8) generate the first clock signal (f_{T2}) and the second clock signal (f_{T1}) from the reference signal (FBAS).

15. Device according to claim 12, **characterised in that** the first and second clock signal generating devices (11, 7, 8) generate the first clock signal (f_{T2}) and the second clock signal (f_{T1}) from an externally supplied clock signal, which in particular corresponds to the first clock signal (f_{T2}).

16. Device according to claim 12, in which the device (1) is an analogue/digital converter.

17. Device according to one of the preceding claims, in which the conversion device (6) outputs digitised sampled values.

18. Device according to one of the preceding claims, **characterised in that** the conversion device (6) is configured in such a way that it carries out the function of an interpolator, in particular a linear interpolator.

19. Device according to one of the preceding claims, **characterised in that** the second clock signal generating device (7, 8) is configured in the form of a digital phase-locked loop which comprises a digital phase detector device (7) and a digitally controlled oscillator device (8),
wherein the digitally controlled oscillator device (8) generates the second clock signal (f_{T1}), and
wherein the digital phase detector device (7) determines the phase difference between the digitised sampled values of the reference signal (FBAS) which are output by the conversion device (6) and the second clock signal (f_{T1}) which is generated by the digitally controlled oscillator device (8) and, in a manner dependent thereon, generates a digital adjustment value (INCR) for the digitally controlled oscillator device (8) for accordingly adapting the frequency of the second clock signal (f_{T1}).

20. Device according to one of the preceding claims 13 or 16 to 19, **characterised in that** the operating clock signal (f₀) is a high-frequency quartz-coupled clock signal.

21. Device according to one of the preceding claims, **characterised in that** first memory means (2, 3) are provided for buffer-storing the sampled values of the reference signal (FBAS) which are output by the analogue/digital converter device (1) at the frequency of the second clock signal (f_{T1}), and **in that** second memory means (4, 5) are provided for buffer-storing the digitised sampled values buffer-stored in the first memory means (2, 3) at the frequency of the first clock signal (f_{T2}) and supplying them to the conversion device (6).

22. Device according to one of the preceding claims, **characterised in that** a counter (9) operated with the operating clock signal (f₀) is provided, and **in that** the first clock signal generating device (11) is configured in such a way that it generates the first clock signal (f_{T2}) by evaluating the counter state of the counter (9).

23. Device according to claim 22, **characterised in that** the phase difference determination device comprises memory means (10) for determining the momentary counter state of the counter (9) at the frequency of the second clock signal (f_{T1}) and for supplying the respectively determined counter state to the conversion device (6) as a measure of the phase difference between the first clock signal (f_{T2}) and the second clock signal (f_{T1}).

24. Device according to one of the preceding claims 13 or 16 to 23, **characterised in that** the reference signal (FBAS) is a video signal, in particular a television signal, and **in that** the frequency (f₀) of the operating clock signal, from which the first and/or second clock signal (f_{T2}; f_{T1}) is derived, is at least 600 MHz.

## Revendications

1. Procédé de production d'un signal de rythme couplé à un signal de référence (FBAS), comportant les étapes suivantes :
a) préparation d'un premier signal de rythme (f_{T2}) à partir d'un signal de rythme de fonctionnement (fo), du signal de référence (FBAS) ou d'un signal de rythme fourni de l'extérieur,
b) préparation d'une suite de valeurs de balayage du signal de référence (FBAS) avec la fréquence du premier signal de rythme (f_{T2}),
c) préparation d'un second signal de rythme (f_{T1}) à partir de la même source de signal que le premier signal de rythme,
d) détermination de l'écart de phase entre le premier signal de rythme (f_{T2}) et le second signal de rythme (f_{T1}), et
e) conversion des valeurs de balayage du signal de référence (FBAS) présentes avec la fréquence du premier signal de rythme (f_{T2}) en valeurs de balayage correspondantes présentes avec la fréquence du second signal de rythme (f_{T1}) sur la base de l'écart de phase déterminé à l'étape d), et les valeurs de balayage du signal de référence (FBAS) qui en résultent sont utilisées à l'étape c) comme instructions de consigne pour la production du second signal de rythme (f_{T1}), afin de produire ainsi le second signal de rythme (f_{T1}) couplé au signal de référence (FBAS).

2. Procédé selon la revendication 1,
**caractérisé en ce que**
le signal de référence (FBAS) est couplé au premier signal de rythme (f_{T2}) ou au second signal de rythme (f_{T1}), et le premier signal de rythme (f_{T2}) et le second signal de rythme (f_{T1}) sont produits à partir du signal de référence (FBAS).

3. Procédé selon l'une des revendications 1 ou 2,
**caractérisé en ce que**
les valeurs de balayage sont produites sous la forme de valeurs de balayage numérisées.

4. Procédé selon l'une quelconque des revendications précédentes,
**caractérisé en ce qu'**
on effectue à l'étape e) une interpolation des valeurs de balayage du signal de référence (FBAS) préparées à l'étape b) avec la fréquence du premier signal de rythme (f_{T2}) et sur la base de l'écart de phase déterminé à l'étape d), et on utilise les valeurs de balayage du signal de référence (FBAS) numérisées interpolées ainsi obtenues, comme instruction de consigne à l'étape c) pour la production du second signal de rythme (f_{T1}).

5. Procédé selon l'une quelconque des revendications précédentes,
**caractérisé en ce qu'**
on effectue à l'étape e) une interpolation linéaire.

6. Procédé selon l'une quelconque des revendications précédentes,
**caractérisé en ce qu'**
on produit le second signal de rythme (f_{T1}) à l'étape e) à l'aide d'un circuit numérique de régulation de phase (7, 8).

7. Procédé selon l'une quelconque des revendications précédentes,
**caractérisé en ce qu'**
on utilise comme signal de rythme de fonctionnement (f₀) un signal de rythme à haute fréquence couplé au quartz.

8. Procédé selon l'une quelconque des revendications précédentes,
**caractérisé en ce que**
les valeurs de balayage du signal de référence (FBAS) préparées à l'étape c) sont mémorisées temporairement avant leur utilisation lors de la conversion effectuée à l'étape e) avec la fréquence du second signal de rythme (f_{T1}) et sont ensuite seulement utilisées pour la conversion.

9. Procédé selon la revendication 8,
**caractérisé en ce que**
l'écart de phase entre le premier signal de rythme (f_{T2}) et le second signal de rythme (f_{T1}) est déterminé à l'étape e) avec la fréquence du second signal de rythme (f_{T1}) et est mémorisé temporairement en synchronisme avec les valeurs de balayage numérisées du signal de référence (FBAS).

10. Procédé selon l'une quelconque des revendications précédentes,
**caractérisé en ce qu'**
on produit à l'étape a) le premier signal de rythme (f_{T2}) par exploitation de l'état de comptage d'un compteur (9) fonctionnant avec le signal de rythme de fonctionnement (f₀).

11. Procédé selon la revendication 10,
**caractérisé en ce qu'**
on détermine l'état de comptage instantané du compteur (9) à la fréquence du second signal de rythme (f_{T1}) et on utilise l'état de comptage respectif déterminé à l'étape d) comme mesure de l'écart de phase entre le premier signal de rythme (f_{T2}) et le second signal de rythme (f_{T1}).

12. Dispositif de production d'un signal de rythme couplé à un signal de référence, comprenant:
- un premier dispositif de production de signal de rythme (11) pour produire un premier signal de rythme (f_{T2}),
- un dispositif fonctionnant avec le premier signal de rythme (f_{T2}), qui obtient une suite de valeurs de balayage du signal de référence (FBAS),
- un second dispositif de production de signal de rythme (7, 8) pour produire un second signal de rythme (f_{T1}),
- un dispositif de détermination de l'écart de phase (10) pour déterminer l'écart de phase entre le premier signal de rythme (f_{T2}) et le second signal de rythme (f_{T1}), et
- un dispositif de conversion (6) pour convertir les valeurs de balayage du signal de référence (FBAS) présentes avec la fréquence du premier signal de rythme (f_{T2}) du dispositif (1) en valeurs de balayage correspondantes présentes avec la fréquence du second signal de rythme (f_{T1}) sur la base de l'écart de phase déterminé par le dispositif de détermination de l'écart de phase (10), et les valeurs de balayage du signal de référence (FBAS) émises par le dispositif de conversion (6) sont transmises au second dispositif de production de signal de rythme (7, 8) comme instruction de consigne pour la production du second signal de rythme (f_{T1}), de telle manière que le second dispositif de production de signal de rythme (7, 8) délivre le second signal de rythme (f_{T1}) couplé avec le signal de référence (FBAS).

13. Dispositif selon la revendication 12,
**caractérisé en ce qu'**
il dispose d'un signal de rythme de fonctionnement (fo), à partir duquel les premier et second dispositifs de production de signal de rythme (11, 7, 8) produisent le premier signal de rythme (f_{T2}) et le second signal de rythme (f_{T1}).

14. Dispositif selon la revendication 12,
**caractérisé en ce que**
les premier et second dispositifs de production de signal de rythme (11, 7, 8) produisent le premier signal de rythme (f_{T2}) et le second signal de rythme (f_{T1}) à partir du signal de référence (FBAS).

15. Dispositif selon la revendication 12,
**caractérisé en ce que**
les premier et second dispositifs de production de signal de rythme (11, 7, 8) produisent le premier signal de rythme (f_{T2}) et le second signal de rythme (f_{T1}) à partir d'un signal de rythme fourni de l'extérieur, qui correspond en particulier au premier signal de rythme (f_{T2}).

16. Dispositif selon la revendication 12,
**caractérisé en ce que**
le dispositif (1) est un convertisseur analogique/numérique.

17. Dispositif selon l'une quelconque des revendications précédentes,
**caractérisé en ce que**
le dispositif de conversion (6) émet des valeurs de balayage numérisées.

18. Dispositif selon l'une quelconque des revendications précédentes,
**caractérisé en ce que**
le dispositif de conversion (6) est assure la fonction d'un interpolateur, en particulier d'un interpolateur linéaire.

19. Dispositif selon l'une quelconque des revendications précédentes,
**caractérisé en ce que**
le second dispositif de production de signal de rythme (7, 8) est un circuit numérique de régulation de phase, qui comprend un dispositif de détecteur de phase numérique (7) et un dispositif d'oscillateur à commande numérique (8), dont le dispositif d'oscillateur à commande numérique (8) produit le second signal de rythme (f_{T1}), et le dispositif de détecteur de phase numérique (7) détermine l'écart de phase entre les valeurs de balayage numérisées du signal de référence (FBAS) produites par le dispositif de conversion (6) et le second signal de rythme (f_{T1}) produit par le dispositif d'oscillateur à commande numérique (8) et produit, en fonction de cet écart, une valeur de réglage numérique (INCR) pour le dispositif d'oscillateur à commande numérique (8) en vue de l'adaptation correspondante de la fréquence du second signal de rythme (f_{T1}).

20. Dispositif selon l'une quelconque des revendications précédentes 13 ou 16 à 19,
**caractérisé en ce que**
le signal de rythme de fonctionnement (f₀) est un signal de rythme à haute fréquence couplé au quartz.

21. Dispositif selon l'une quelconque des revendications précédentes,
**caractérisé par**
des premiers moyens de mémoire (2, 3) pour le stockage temporaire des valeurs de balayage du signal de référence (FBAS) produites par le convertisseur analogique/ numérique (1) à la fréquence du second signal de rythme (f_{T1}), et des seconds moyens de mémoire (4, 5) pour stocker temporairement des valeurs de balayage numérisées stockées temporairement dans les premiers moyens de mémoire (2, 3) à la fréquence du premier signal de rythme (f_{T2}) et les transmettre au dispositif de conversion (6).

22. Dispositif selon l'une quelconque des revendications précédentes,
**caractérisé en ce qu'**
un compteur (9) fonctionne avec le signal de rythme de fonctionnement (fo), et le premier dispositif de production de signal de rythme (11) produit le premier signal de rythme (f_{T2}) en exploitant de l'état de comptage du compteur (9).

23. Dispositif selon la revendication 22,
**caractérisé en ce que**
le dispositif de détermination de l'écart de phase comprend des moyens de mémoire (10), pour déterminer l'état de comptage actuel du compteur (9) avec la fréquence du second signal de rythme (f_{T1}) et transmettre l'état de comptage déterminé, au dispositif de conversion (6) comme mesure de l'écart de phase entre le premier signal de rythme (f_{T2}) et le second signal de rythme (f_{T1}).

24. Dispositif selon l'une quelconque des revendications précédentes 13 ou 16 à 23,
**caractérisé en ce que**
le signal de référence (FBAS) est un signal vidéo, en particulier un signal de télévision, et la fréquence (f₀) du signal de rythme de fonctionnement, duquel le premier et/ou le second signal de rythme (f_{T2}; f_{T1}) sont déduits, vaut au moins 600 MHz.
